(19) **Europäisches Patentamt / European Patent Office / Office européen des brevets**

(11) **EP 1 884 395 B1**

(12) **EUROPEAN PATENT SPECIFICATION**

(45) Date of publication and mention
of the grant of the patent:
**25.11.2009 Bulletin 2009/48**

(51) Int Cl.:
**B60K 23/04** (2006.01)

(21) Application number: **06016309.4**

(22) Date of filing: **04.08.2006**

(54) **Method of controlling torque transfer direction in limited slip differentials**

Verfahren zur Steuerung der Drehmomentdurchgangsrichtung in schlupfbegrenzten Differentialen

Procédé de commande de la direction du transfert de couple dans des différentiels à glissement limité

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**06.02.2008 Bulletin 2008/06**

(73) Proprietor: **GM Global Technology Operations, Inc.**
**Detroit, MI 48265-3000 (US)**

(72) Inventors:
• **Carlén, Mattias**
  **41311 Göteborg (SE)**
• **Yngve, Simon**
  **41483 Göteborg (SE)**

(74) Representative: **Daniel, Ulrich W.P.**
**Adam Opel GmbH**
**Patent- und Markenrecht/ A0-02**
**65423 Rüsselsheim (DE)**

(56) References cited:
**EP-A2- 1 616 743      US-A1- 2001 025 219**

## Description

## FIELD OF THE INVENTION

The present invention generally relates to control strategies for electronically controlled limited slip differentials and particularly relates to a method of controlling torque transfer direction in an electronically controllable limited slip differential (LSD).

## BACKGROUND ART

In recent years, in automotive industries, more and more cars have been equipped with electronically controlled stability control systems on account of the fact that many of the severe traffic accidents result from a loss of control of the vehicle. Stability control systems typically employ the brakes to stabilize the vehicle in critical situations, which, however, necessarily results in a net-reduction of the vehicle's speed. Particularly in view of driving pleasure, instead of using the brakes, it seems more desirable to redistribute the driving force between the right and left wheels, which can be done limiting the allowable speed difference in the differential, e. g., using an electronically controlled limited slip differential.

Differentials as such are well-known in the prior art. They allow a pair of output shafts operatively coupled to an input shaft to rotate at different speeds, thereby allowing the wheel associated with each output shaft to maintain traction with the road while the vehicle is turning. More specifically, differentials essentially distribute the torque provided by the input shaft between the output shafts. Most modern cars often merely have a completely open differential which for most cases works in a satisfying manner.

Completely open differentials, however, are unsuitable in slippery conditions where one wheel experiences a much lower coefficient of friction than the other wheel, for example, when one wheel of a vehicle is located on a patch of ice and the other wheel is on dry pavement. In such a condition, the wheel experiencing the lower coefficient of friction loses traction and a small amount of torque to that wheel will cause a rapid spinning.

Since the maximum amount of torque that can be developed on the wheel with traction is equal to the torque on the wheel without traction (i.e. the slipping wheel), the engine is unable to develop torque and the wheel with traction may be unable to rotate, with the result that the vehicle will stay stationary or move very slowly.

Up to date, a variety of limited slip differentials have been developed to limit wheel slippage under such conditions. Ideal LSDs act as varying differentials between their two extreme operating states i.e. completely engaged or not engaged. To this end, LSDs provided for limiting slippage typically use a frictional clutch mechanism, either clutch plates or a frustoconical engagement structure, as well as a specific biasing mechanism to apply load between side gears connected to the output shafts and the differential casing connected to the input shaft.

In a purely mechanical variant thereof, the LSD's clutch mechanism may use a spring to initially preload the side gears so that a minimum torque can always be applied to the wheel having traction. However, such preloaded clutches are always engaged and thus are susceptible to wear thus causing undesired repair and replacements costs.

Other LSDs use mechanical or hydraulic arrangements to apply locking torque to the side gears on basis of a sensed difference in rotational speed or torque between the two output shafts - called "speed sensitive differentials" or "torque sensitive differentials", which, however, are complicated in structure, and due to their passive nature may not be controlled.

In order to overcome such a drawback, in recent years, electronically controlled LSDs have been developed that enable control of actuation in response to a (selectable) predetermined differentiation condition of the differential using an electronically controlled clutch. In other words, the electronically controlled LSD is a differential where the differentiating speed can be restricted using a controllable clutch that can be actuated electronically using an actuating means, such as an electromagnet, so that in contrast to passive LSDs it becomes possible to control the LSD independently of the differentiating torque or speed of the output shafts. The controllable variable in the electronically controlled LSD is the torque which can be transferred between left and right wheels by locking or unlocking the clutch.

Conventionally, control of electronically controllable LSDs is performed in a closed loop control system for instance using a <u>p</u>roportional-<u>i</u>ntegral-<u>d</u>erivative (PID)-controller, which is a common feedback loop component in industrial control systems to control any measurable process variable which can be affected by manipulating any other process variable.

In principal, in a typical PID-controller, an error signal, conventionally defined to be the calculated difference between reference value and measured value of the process value under consideration, is used for calculating a control signal to be supplied to an actuating means that brings the measured process value back to its desired reference value.

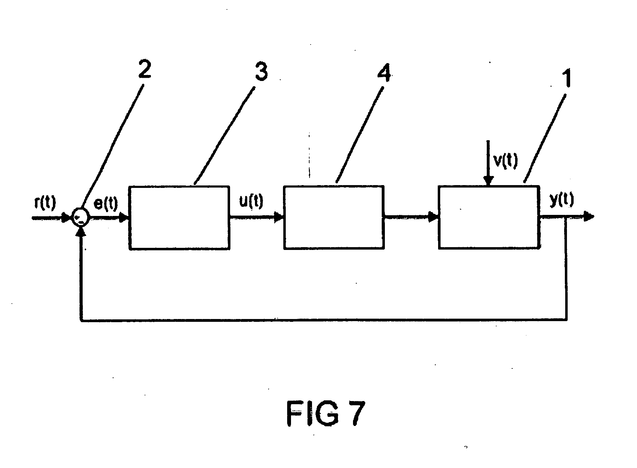

Reference is now made to FIG. 7 illustrating the principal layout of a conventional closed loop control system based on a PID-controller, which, for instance, can be used to control an LSD. Accordingly, the control system includes a system 1 to be electronically controlled such as an LSD, a differentiating means 2 being provided with the measured value y(t) of any measurable system variable and provided with a reference value r(t) that is pre-set or determined to calculate an error signal e(t) thereof as-above described, a controller 3 for calculating an output (control) signal u(t) on basis of the input error signal e (t) , and an actuator 4 for acting on the system 1 to bring the measured system value back to its desired reference value.

More specifically, in such control system, in the PID-controller, correction of the process value is calculated from the error signal in three ways: In order to handle the present, the error is multiplied by a negative constant and added to the controlled quantity. In order to handle the past, the error is integrated over a period of time, multiplied by a negative constant and then added to the controlled quantity. And, in order to handle the future, the first derivative of the error over time is calculated, multiplied by another negative constant and then added to the controlled quantity.

Accordingly, the PID-controller's output u(t) used as control signal for the actuating means may be written as sum of three contributing parts:

$$u(t) = P_{contrib} + I_{contrib} + D_{contrib}$$

where $P_{contrib}$, $I_{contrib}$ and $D_{contrib}$ are the feedback contributions from the P-controller, I-controller, and D-controller, as defined below:

$$P_{contrib} = K_p e(t)$$

$$I_{contrib} = K_i \int_{-\infty}^{t} e(t) dt$$

$$D_{contrib} = K_d \frac{de(t)}{dt}$$

with $K_p$, $K_i$ and $K_d$ being proportional constants: proportional gain, integral gain and derivative gain, respectively.

Electronically controlled LSDs embedded in such closed loop control systems based on PID-controllers are well-known to those of skill in the art, and, therefore, need not be further detailed here.

In modern vehicles, electronically controlled LSDs may advantageously be used for yaw rate control of the vehicle to stabilize the vehicle particularly when making a turn. In other words, controlled torque transfer by locking or unlocking the clutch can be used to decrease or increase the yaw rate in specific situations to stabilize the vehicle.

As a matter of fact, torque transferred to the wheel having the best traction by locking the differential clutch affects the vehicle differently in accordance to the specific state of the vehicle, particularly vehicle speed in making a turn, as can be seen from the following:

Considering a case when the vehicle starts driving straight ahead with no wheel speed difference, and the driver puts an angle on the steering wheel so that the vehicle starts a right turn. Then, the wheels will start to rotate with different angular velocities due to their different paths, with different rotational velocities of left and right wheels being allowed by the properties of an open differential. In the beginning of the right turn, if the vehicle does not have too high velocity, the left (outer) wheel will spin faster than the right (inner) wheel. Hence, the vehicle yaws clockwise about the center of gravity of the vehicle as seen from above.

If the LSD will be engaged at this time, the torque transferred by the clutch will be transferred from the (faster spinning) left wheel to the (slower spinning) right wheel, thus creating a moment that works counterclockwise on the center of gravity, thereby decreasing the yaw rate of the vehicle. Accordingly, the vehicle will go more straight ahead.

Otherwise, during making a right turn, if the driver applies more throttle or increases the steering wheel angle, the vehicle receives a higher lateral acceleration and the load on the wheels changes due to load transfer from the right side to the left side. Accordingly, the right wheel receives a reduced load giving the tire an increased slip, which may become so high that the inner wheel starts to spin faster than the outer wheel. Engaging the clutch in such a situation will result in torque transferred from the right side to the left side, creating a yaw moment that works clockwise, that is to say in the same direction as the yaw moment created by driving a right turn. Hence, torque transfer increases the yaw rate and tries to rotate the vehicle even more in the clockwise direction.

Basically, in electronically controlled LSDs, in order to control the yaw rate to stabilize the vehicle in a turn, in case the differential is open, the possible torque transfer caused by locking the differential can be decided upon the wheel speed difference, i.e. the calculated difference of wheel speeds of left and right wheels as measured by wheel speed sensing means. As above detailed, in case a wheel speed difference is present, the wheel spinning fastest has the least traction and by locking the LSD torque can only be transferred to the wheel spinning lower and having better traction.

A method of controlling a clutch based limited slip differential (LSD) in a controller based closed loop control system wherein said controller controls the LSD to control the vehicle's yaw rate is known from EP-A-1616743.

However, in case the LSD is locked, the wheel speed difference will be zero or very low, for which reason the difference in wheel speeds cannot be used to determine which wheel has the best traction, so that it cannot be decided on basis of the wheel speed difference of left and right wheels into which direction torque can be transferred to control the vehicle's yaw rate. In other words, the effect of keeping the differential locked cannot be determined on basis of the wheel speed difference, so that yaw rate control may not be performed properly.

In order to overcome such a drawback, according to the present invention, a method of controlling a limited slip differential to decide whether the wheel speed difference of left and right wheels can be used for determining into which direction torque transfer is possible in yaw rate control of the vehicle has been developed.

## SUMMARY OF THE INVENTION

In light of the above, the present invention discloses a method of controlling an electronically controlled limited slip differential (LSD) in a closed loop control system based on a PID-controller in a vehicle in order to control the vehicle's yaw rate.

The control system includes an electronically controllable limited slip differential that allows a pair of output shafts operatively coupled to an input shaft to rotate at different speeds, thereby allowing the wheel associated with each output shaft to maintain traction with the road while the vehicle is turning.

Actuation of the LSD by means of an actuating means is made in response to a (selectable) predetermined differentiation condition of the LSD using an electronically controllable clutch actuated by the actuating means.

The control system for controlling the LSD in order to control the vehicle's yaw rate is based on a PID-controller that creates a control signal on basis of a calculated yaw rate error to be supplied to the actuating means for controlling actuation thereof. Conventionally, the yaw rate error is defined to be the difference of reference yaw rate and measured yaw rate. The reference yaw rate may be pre-set or else is calculated using specific reference yaw rate determination logic, while the measured yaw rate is measured using specific yaw rate sensing means. The PID-controller's output signal is output to the actuating means for actuation in accordance with such signal, with the actuating means being operatively coupled to the LSD for control.

The system further comprises a dedicated logic device (hereinafter referred to as ability signal logic) being operatively coupled to the PID-controller and adapted for creating a signal output (hereinafter referred to as ability signal) dependent on the sign and value of a wheel speed difference of left and right wheels that are coupled by the LSD. The wheel speeds are measured by specific wheel speed sensing means connected to the ability signal logic.

More specifically, the ability signal may adopt a positive value, e.g. +1, in case of a wheel speed difference having a first sign with the absolute value of the wheel speed difference being above a first threshold value; it may adopt a negative value (with a same absolute value as the positive value), e.g. -1, in case of a wheel speed difference having the opposite, second sign and the absolute value of the wheel speed difference being above the first threshold value; and it may be zero in case of a lacking wheel speed difference.

The ability signal created in accordance with sign and value of the wheel speed difference then is output to the PID-controller for multiplication with the yaw rate error to control the sign of the yaw rate error depending on the sign of the wheel speed difference.

According to the invention, the method of controlling the LSD in a vehicle, in a locked state of the LSD clutch, comprises a step of deciding whether the wheel speed difference of left and right wheels coupled by the LSD can be used or not to determine possible torque transfer.

More specifically, in case of a wheel speed difference (between left and right wheels coupled by the LSD) having the first sign with the absolute value of the wheel speed difference being above the first threshold value, and if the clutch engagement is below a pre-determined second threshold value running from 0 to 1 to identify its locking state from unlocked to fully locked, which threshold value for instance is chosen to be 0.1 which means that the clutch is less than 10% locked, then the ability signal logic outputs a positive value, e.g. +1, and the wheel speed difference of left and right wheels coupled by the LSD can be used for yaw rate control. Such situation is hereinafter referred to as "first state" of the control system as controlled by the ability signal logic.

Otherwise, in case of a wheel speed difference (between left and right wheels coupled by the LSD) having the opposite, second sign with the absolute value of the wheel speed difference being above the first threshold value, and if clutch engagement is below the predetermined second threshold value, then the ability signal logic outputs a negative value, e.g. -1, and the wheel speed difference of left and right wheels coupled by the LSD can be used for yaw rate control. Such situation is hereinafter referred to as "second state" of the control system as controlled by the ability signal logic.

Now, starting from the first state, in case that LSD clutch engagement is above the pre-determined second threshold value with the wheel speed difference having the first sign, the ability signal maintains its positive value and it is decided that the wheel speed difference of left and right wheels coupled by the LSD cannot be used for yaw rate control. Such situation is hereinafter referred to as "third state" of the control system as controlled by the ability signal logic.

Otherwise, starting from the second state, in case that the LSD clutch engagement is above the predetermined second threshold value with the wheel speed difference having the second sign, the ability signal maintains its negative value and it is decided that the wheel speed difference of left and right wheels coupled by the LSD cannot be used for yaw rate control. Such situation is hereinafter referred to as "fourth state" of the control system as controlled by the ability signal logic.

Now, if the LSD is engaged, the following three criteria must be fulfilled before looking at the wheel speeds to determine possible torque transfer. (As will be understood from the following, these criteria are used as a way to identify that the inner wheel has regained traction in specific driving situations).

According to a first criterion, starting from the third state, where wheel speed difference of left and right wheels coupled by the LSD may not be used for yaw rate control, the control system goes back to its first state, having the same ability signal and where wheel speed difference of left and right wheels coupled by the LSD can be used for yaw rate control, if it is sensed that a signal identifying the locking state of the LSD clutch is below a predetermined third threshold value, which may be the same as the second threshold value. Similarly, starting from the fourth state, where wheel speed difference of left and right wheels coupled by the LSD may not be used for yaw rate control, the control system goes back to its second state, having the same ability signal and where wheel speed difference of left and right wheels coupled by the LSD can be used for yaw rate control, if it is sensed that a clutch position signal identifying the locking state of the LSD clutch is below the predetermined third threshold value, which may be the same as the second threshold value.

In both above cases, preferably, the third threshold value is chosen to amount to 0.1 which means that the clutch is less than 10% locked.

In order to receive the signal identifying the locking state of the clutch, the ability signal logic is connected with a clutch position sensing means for sensing of the locking state of the LSD clutch with the signal thereof being provided to the ability signal logic.

Hence, according to a first aspect of the invention, a method of controlling a clutch based limited slip differential of a vehicle in a PID-controller based closed loop control system is disclosed. The control system includes a PID-controller for controlling of the LSD to control the vehicle's yaw rate with the PID-controller being adapted to create a control signal based on a yaw rate error as calculated on basis of reference and measured yaw rates, with the control signal being supplied to an actuating means operatively coupled to the LSD for actuating thereon based on the PID-controller's control signal. It further includes an ability signal logic being provided with wheel speeds of the wheels coupled by the LSD and adapted for creating an ability signal based on a wheel speed difference, with the ability signal logic being connected to the PID-controller for supplying the ability signal to the PID-controller to be multiplied with the yaw rate error.

Such method comprises a step of deciding, in an at least partly engaged state of the LSD, whether the wheel speed difference may be used to determine possible torque transfer, with the wheel speed difference being used if a clutch position signal as sensed by a clutch position sensing means connected to the ability logic is sensed to be below a predetermined threshold value.

According to a second criterion, starting from the third state, where the wheel speed difference of left and right wheels coupled by the LSD may not be used for yaw rate control, the control system goes back to its first state, having the same ability signal and where wheel speed difference of left and right wheels coupled by the LSD can be used for yaw rate control, if a clutch unlocking control signal (e.g. flag) controlling at least partial unlocking of the clutch is provided to the LSD. Similarly, starting from the fourth state, where wheel speed difference of left and right wheels coupled by the LSD may not be used for yaw rate control, the control system goes back to its second state, having the same ability signal and where wheel speed difference of left and right wheels coupled by the LSD can be used for yaw rate control, if the clutch unlocking control signal controlling at least partial unlocking of the clutch is provided to the LSD. To be provided with such control signal, the ability signal logic is connected to a clutch unlocking control signal providing means being part of the LSDs control system.

Such clutch unlocking control signal instructing at least partial unlocking of the LSD may be based on the lateral acceleration of the vehicle going below a fourth predetermined threshold value on condition that the derivative thereof is negative. Such control signal may also be based on throttle off as sensed by a throttle position sensing means.

Hence, according to a second aspect of the invention, a method of controlling a clutch based limited slip differential of a vehicle in a PID-controller based closed loop control system is disclosed. The control system includes a PID-controller for controlling of the LSD to control the vehicle's yaw rate with the PID-controller being adapted to create a control signal based on a yaw rate error as calculated on basis of reference and measured yaw rates, with the control signal being supplied to an actuating means operatively coupled to the LSD for actuating thereon based on the PID-controller's control signal.

It further includes an ability signal logic being provided with wheel speeds of the wheels coupled by the LSD and adapted for creating an ability signal based on a wheel speed difference, with the ability signal logic being connected to the PID-controller for supplying the ability signal to the PID-controller to be multiplied with the yaw rate error.

Such method comprises a step of deciding, in an at least partly engaged state of the LSD, whether the wheel speed difference may be used to determine possible torque transfer, with the wheel speed difference being used if the clutch unlocking control signal instructing at least partial unlocking of the LSD clutch is supplied to the actuating means.

According to a third criterion, starting from the third state, where wheel speed difference of left and right wheels coupled by the LSD may not be used for yaw rate control, the control system goes back to its first state, having the same ability signal and where wheel speed difference of left and right wheels coupled by the LSD can be used for yaw rate control, if the measured yaw rate of the vehicle changes its sign. Similarly, starting from the fourth state, where wheel speed difference of left and right wheels coupled by the LSD may not be used for yaw rate control, the control system goes back to its second state, having the same ability signal and where wheel speed difference of left and right wheels coupled by the LSD can be used for yaw rate control, if the measured yaw rate of the vehicle changes its sign.

To this end, the ability signal logic is connected to a yaw rate sensing means to be provided with measured yaw rates of the vehicle.

Hence, according to a third aspect of the invention, a method of controlling a clutch based limited slip differential of a vehicle in a PID-controller based closed loop control system is disclosed. The control system includes a PID-controller for controlling of the LSD to control the vehicle's yaw rate with the PID-controller being adapted to create a control signal based on a yaw rate error as calculated on basis of reference and measured yaw rates, with the control signal being supplied to an actuating means operatively coupled to the LSD for actuating thereon based on the PID-controller's control signal. It further includes an ability signal logic being provided with wheel speeds of the wheels coupled by the LSD and adapted for creating an ability signal based on a wheel speed difference, with the ability signal logic being connected to the PID-controller for supplying the ability signal to the PID-controller to be multiplied with the yaw rate error.

Such method comprises a step of deciding, in an at least partly engaged state of the LSD, whether the wheel speed difference may be used to determine possible torque transfer, with the wheel speed difference being used if the measured yaw rate of the vehicle changes its sign.

Upon doing so, by always knowing the ability signal of the LSD for controlling of the yaw rate error, the actions taken by the control strategy gives the desired behavior. By not using the wheel speed difference when locked, the transition between the different states are done with higher accuracy.

Other and further objects, features and advantages of the invention will appear more fully from the following description.

**BRIEF DESCRIPTION OF THE DRAWINGS**

The accompanying drawings, which are incorporated in and constitute a part of the specification, illustrate embodiments of the invention, and together with the general description given above and the detailed description given below, serve to explain the principles of the invention.

FIG. 1 is a diagram depicting an exemplary conceptual layout of the control strategy for the electronically controlled LSD in a closed loop control system on basis of a PID-controller;

FIG. 2 is a diagram depicting yaw rate [deg/sec] versus time [sec] in a case when the driver making a turn holds the steering wheel in a same angle and releases the throttle after an time period of 3 seconds without engagement of the differential clutch;

FIG. 3 is a diagram depicting adaptation of the measured yaw rate [deg/sec] and the reference yaw rate [deg/sec] versus time [sec] during throttle off in making a turn;

FIG. 4 is diagram illustrating the measured yaw rate [deg/sec] versus time [sec] during throttle off in making a turn with the LSD being open (dashed line) and being locked (solid line) adapting the yaw rate error;

FIG. 5 is a diagram depicting an exemplary flux diagram of a method to decide whether the wheel speed difference of left and right wheels can be used to determine into which direction torque transfer is possible;

FIG. 6 is a diagram depicting as an example vehicle velocity [km/h] over time [sec] of a vehicle driving on a split-μ surface, in case of an electronically controlled LSD using split-μ feed forward logic and in case of an open differential;

FIG. 7 is a diagram illustrating the principal layout of a conventional closed loop control system based on a PID-controller.

**DETAILED DESCRIPTION OF THE INVENTION**

Embodiments of the present invention will be described in detail below with reference to the accompanying drawings, where like designations denote like or similar elements.

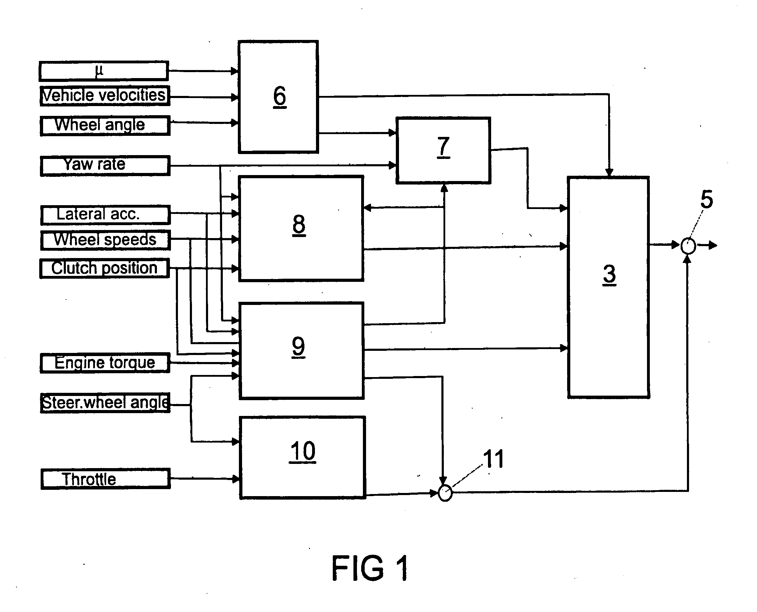

First, reference is made to FIG. 1 which is a diagram depicting an exemplary conceptual layout of the control strategy for the electronically controlled LSD in a closed loop control system on basis of a PID-controller.

Accordingly, the closed loop control system is based on a PID-controller 3 with variable parameters, the output signal (c) of which is a control signal to be supplied to an actuating means (not shown in Fig. 1) acting on the electronically controllable LSD (not shown in Fig. 1) on basis of the control signal input. The output signal of the PID-controller 3 is used to control on the yaw rate error of the vehicle.

In the control system, on the upstream side of the PID-controller 3, a plurality of logic devices or components ("logic") are arranged enabling update of parameters for usage by the PID-controller 3 to give satisfying control during different driving conditions.

The logic components include a bicycle reference model logic 6 adapted for creating and outputting a reference yaw rate signal, an adaptation logic 7 adapted for adapting and outputting a yaw rate error signal, an ability signal logic 8 adapted for creating and outputting an ability signal to be multiplied with the yaw rate error signal, a scenario identification logic 9 adapted for creating, changing and outputting parameters of the PID-controller, and a split-μ feed forward logic 10 adapted for creating and outputting a control signal to be added with the PID-controller output signal in a split-μ condition.

Outputs of the bicycle reference model logic 6, the adaptation logic 7, the ability signal logic 8 and the scenario identification logic 9 respectively are connected with the input side of the PID-controller 3, so that output signals of these logic devices can directly be supplied to the PID-controller 3. Otherwise output of the split-μ feed forward logic 10 is connected to an adder means 5, so that an output signal of the split-μ feed forward logic 10 and an output signal of the PID-controller 3 can be added.

The logic components are provided with a plurality of input signals as is explicitly given on the their left sides. These input signals will be measured by dedicated sensing means or, alternatively, will be estimated.

Accordingly, the bicycle reference model logic 6 is provided with the road friction coefficient μ, which coefficient typically is estimated, the vehicle velocities, that is to say signals describing the longitudinal and lateral velocities of the vehicle, which typically are measured using longitudinal velocity and lateral velocity sensing means, and the wheel angles, which typically are measured using wheel angle sensing means. The bicycle reference model logic 6 outputs a yaw rate reference signal based on its input values that is supplied to the adaptation logic 7.

The adaptation logic 7 on its input side is provided with a reference yaw rate being an output signal of the bicycle reference model logic 6. It further is provided with a measured yaw rate signal that is measured using a yaw rate signal sensing means. On its output side, the adaptation logic 7 outputs a yaw rate error signal supplied to the PID-controller 3 for further processing to create a control signal for controlling the LSD.

The ability signal logic 8 on its input side is provided with the measured yaw rate, a lateral acceleration, which is measured using a lateral acceleration sensing means, the wheel speeds, that is to say signals of the wheel speeds which are measured using wheel speed sensing means, and a clutch position, which is measured using a clutch position sensing means. The output signal of the ability signal logic 8 is supplied to the PID-controller 3 to be multiplied with the yaw rate error signal.

The scenario identification logic 9, on its input side, is provided with the measured yaw rate, the measured lateral acceleration, the wheel speeds, the clutch position, an engine torque, which is measured using an engine torque sensing means, and a steering wheel angle, which is sensed using a steering wheel angle sensing means. Output signals of the scenario identification logic 9, inter alia, are supplied to the PID-controller 3 and the adaptation logic 7.

The split-μ feed forward logic 10, on its input side, is provided with the steering wheel angle and a throttle signal, which is measured using a throttle sensing means. An output signal of the split-μ feed forward logic 10 is supplied to a processing means 11 which is also provided with an output signal of the scenario identification logic 9 in order to calculate a control signal supplied to the adder means 5. The adder means 5 is further provided with an output signal of the PID-controller in order to calculate a control signal supplied to the actuating means for controlling the LSD.

All sensing means as above-cited and used for sensing of input signals supplied to the logic devices as such are well-known to those of skill in the art, and, hence, need not be further detailed here.

Now, when releasing throttle in a turn, the vehicle receives an increase in yaw rate which is desirable to eliminate to thus make the vehicle maintain the path. When releasing the throttle, the engine torque drops and becomes negative, which results in a deceleration of the vehicle. When this happens, due to a longitudinal load transfer associated therewith, the load on the front axle will increase while the load on the rear axle decreases. If no change is made in the steering wheel angle the car will describe a tighter turn having a reduced radius. The desired behavior for the vehicle when performing the throttle off, however, is to maintain the current curve radius while decelerating. In order to maintain the curve radius when the velocity is reduced, the yaw rate has to be reduced, too.

Hence, it is an objective for the control strategy to eliminate the initial yaw rate deviation and to reduce the yaw rate proportional to the vehicle velocity to maintain the path.

In the following, adaptation of the yaw rate error when releasing throttle in a turn is explained.

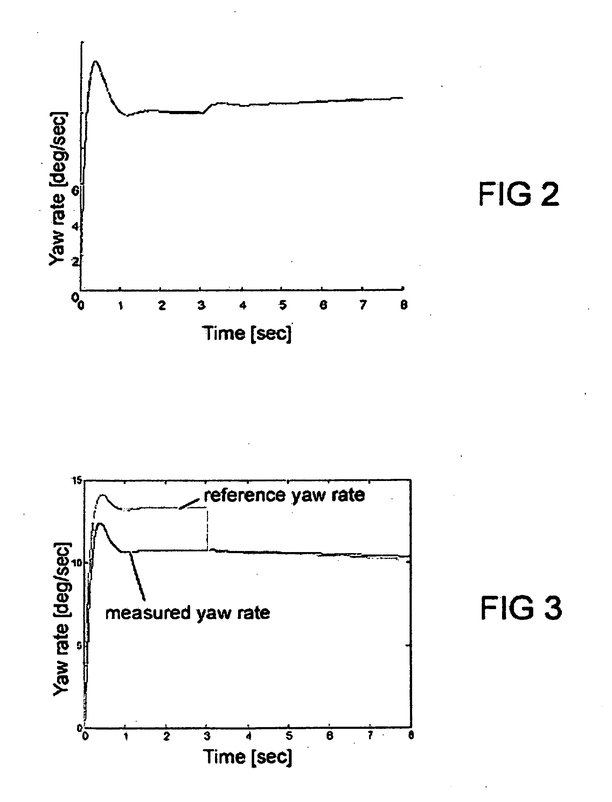

Reference is now made to Fig. 2 which depicts yaw rate [deg/sec] versus time [sec] in a case when the driver making a turn holds the steering wheel in a same angle and releases the throttle after an time period of 3 seconds. As can be seen from Fig. 2, without engaging the differential, the vehicle experiences a slight increase in the yaw rate due to the release of the throttle.

Conventionally, if there is a big difference between the reference yaw rate and the actual yaw rate as measured by the yaw rate sensing means, the PID-controller will not do anything to eliminate the yaw rate deviation due to throttle release because the measured yaw rate signal will not be big enough to cross the reference signal and therefore the differential will remain open. In order to eliminate the yaw rate deviation due to throttle off in a turn, the LSD is to be engaged. However, by locking the LSD completely, the damping effect on the yaw rate will be too large and the vehicle will instead receive an undesirable decrease of the yaw rate making the vehicle under-steered.

Accordingly, in order to determine an appropriate amount of locking of the LSD, instead of trying to control the vehicle's yaw rate to follow the reference yaw rate, the yaw rate control makes the vehicle's yaw rate to follow the deviation of the reference yaw rate. This makes the response fast and accurate.

In order to follow the deviation of the reference yaw rate, according to the present invention, the following adaptation strategy is applied: When throttle off is identified using a throttle position sensing means, a signal to the adaptation logic 7 is given that initializes performance of the yaw rate error adaptation. If the measured yaw rate is smaller than the reference yaw rate, in the adaptation logic 7, adaptation of the yaw rate error takes place. To this end, the measured yaw rate is divided with the reference yaw rate as given at beginning of adaptation and such ratio is saved in a memory included in the adaptation logic 7. While the vehicle is maintained in a throttle off condition the saved ratio is used to be multiplied with the reference yaw rate to calculate an adapted yaw rate error supplied to the PID-controller 3. Then, control is made based on that adapted yaw rate error signal.

Otherwise, in case the vehicle leaves the throttle off condition, that is to say throttle on is identified by the throttle position sensing means, which situation is communicated to the adaptation logic 7, the yaw rate ratio is set to 1 again, so that control of the LSD may be based on the yaw rate error as given by the difference between the reference yaw rate and the measured yaw rate as is conventionally practiced.

Reference is now made to FIG. 3 depicting adaptation of the measured yaw rate [deg/sec] (solid line) and the reference yaw rate [deg/sec] (dashed line) versus time [sec] during throttle off in making a turn. As can be seen from FIG. 3, in a case when the driver makes a turn holding the steering wheel in a same angle and throttle is released after a time period of 3 seconds, due to adaptation of the yaw rate error signal as above-described and performed in the adaptation logic 7, a significant decrease of the deviation of the yaw rate due to throttle off when making a turn can be observed. As can further be taken from FIG. 3, the measured yaw rate and the reference yaw rate align with each other after adaptation of the yaw rate error signal.

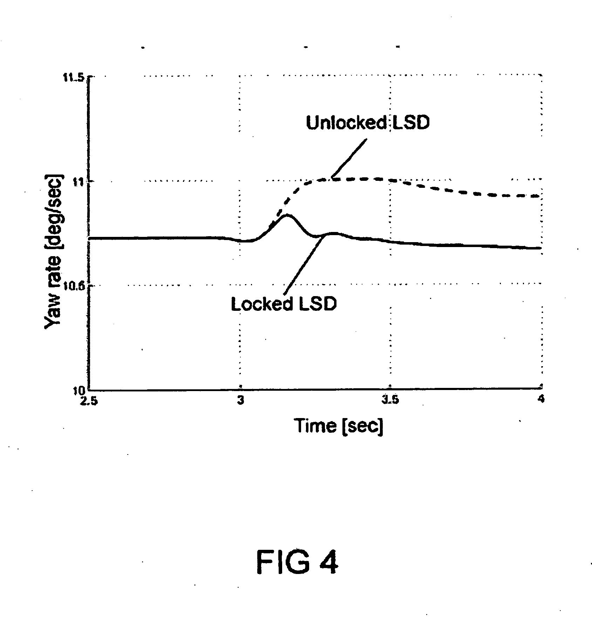

Reference is now made to FIG. 4 illustrating the measured yaw rate [deg/sec] versus time [sec] during throttle off in making a turn with the LSD being open (dashed line) and being locked (solid line) as controlled under performing adaptation of the yaw rate error.

FIG. 4 especially compares to a case, where the initial speed is set to 70 km/h and the driver holds a steering wheel angle of 50 degrees. No control takes place before the throttle off occurs after an elapsed time of 3 sec. When throttle off occurs, the control strategy identifies that by engaging the LSD, it will create the desired behavior. As can be taken from FIG. 4, appropriately locking the LSD (solid line), based on adaptation of the yaw rate error as above-described, deviation of the yaw rate due to throttle off is significantly lowered compared to the open LSD (dashed line).

The bicycle reference model logic 6 uses the well-known bicycle model to calculate the reference yaw rate. In the bicycle model, the vehicle is represented as bicycle, where the two front wheels as well as the two rear wheels may be replaced with one wheel with the cornering being equivalent to both wheels of a same axle. However, using the bicycle model is just an example, and, hence, instead of using the bicycle model, any other reference model may also be used to calculate the reference yaw rate. The bicycle reference model logic 6 also calculates the desired vehicle slip and compares it to the measured vehicle slip. A comparison between the measured vehicle slip and the calculated vehicle slip is supplied to the PID-controller 3 to influence the gains (parameters) in the PID-controller 3.

Now, reference is made to the ability signal logic 8 operatively coupled to the PID-controller 3 for determining into which direction torque may be transferred, which either increases or decreases the yaw rate by locking or unlocking the LSD. The ability signal logic 8 outputs a numeric value which equals 1, 0 or -1 (ability signal), that is passed over to the PID-controller 3 to be used for processing and calculating the control signal for the LSD to decrease the yaw rate of the vehicle in specific driving situations. To this end, the ability signal is used for multiplying with the yaw rate error, so that the sign of the yaw rate error can be varied appropriately since only a positive yaw rate error signal can be used to reduce the yaw rate error.

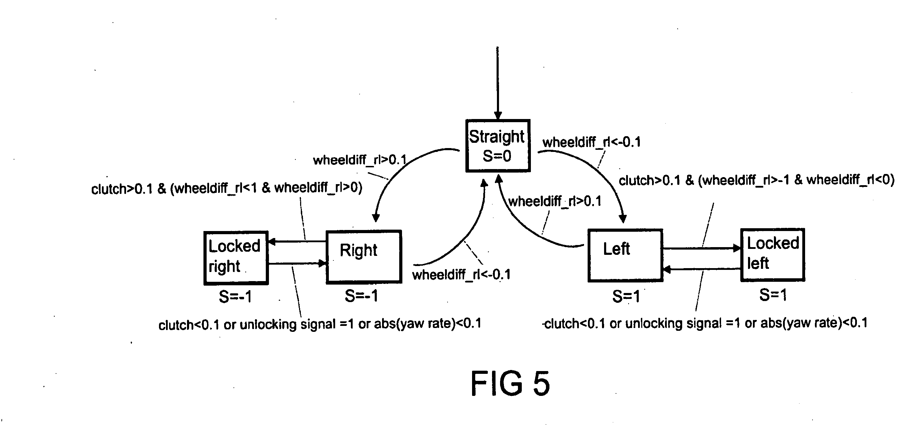

Reference is now made to FIG. 5 depicting an exemplary flux diagram of a method performed by the ability signal logic 8 to decide whether the wheel speed difference of left and right wheels coupled by the LSD can be used to determine into which direction torque transfer is possible.

Accordingly, the control system may take different "states" that are associated with specific values of the ability signal (s), which are a "straight" state, "right" and "left" states and "locked right" and "locked left" states, respectively.

The entrance state for the ability signal control is the straight state that is associated with a numeric value of the ability signal that equals zero (s=0) . In the straight state, no torque transfer is possible, since left and right wheels turn with a same rotational speed.

If one wheel spins faster, depending on the case if this wheel is the right or left wheel, the ability signal s changes from 0 to -1 in the "right" state and from 0 to 1 in the "left" state. In the right state, the right wheel turns faster than the left wheel, which in FIG. 5, as an example, turns 10% faster than the left wheel. In a same way, in the left state, the left wheel turns faster than the right wheel, which in FIG. 5, as an example, turns 10% faster than the right wheel.

In the left or right states, the control system can decide on a wheel speed difference of the wheels coupled by the LSD whether a lock or unlock of the LSD clutch would cause the yaw rate to increase or decrease.

Accordingly, in the control system, the ability signal is used together with the sign of the yaw rate error to determine whether locking will result in an increase or decrease of the yaw rate error. If the ability signal multiplied with the yaw rate error is positive, then the yaw rate error can be decreased by locking the LSD clutch. Otherwise, if the ability signal multiplied with the yaw rate error is negative, then the error cannot be decreased by locking the LSD clutch.

Again referring to Fig. 5, the basic principle of ability signal control is explained:

> For the following considerations it is defined that, for example, a left turn yields a positive yaw rate while a right turn yields a negative yaw rate, and, the wheel speed difference, for example, is calculated to be the wheel speed of right wheel minus the wheel speed of left wheel (wheeldiff_rl).

The default state is "straight". When the vehicle enters a right turn as seen from above, the left wheel turns faster than the right wheel yielding to a negative value of the wheel speed difference (wheeldiff_rl < 0) . The state will then change to "left" and the ability signal is set to +1.

In case that the absolute value of the reference yaw rate is bigger than the absolute value of the measured yaw rate, the yaw rate error becomes negative (considering above definition of the sign of the yaw rate). Then, in order to reduce the yaw rate error, the measured yaw rate must become more negative than what it is, in other words the absolute value of the yaw rate must increase. However, since the outside wheel spins faster than the inner wheel, it is only possible to transfer torque from the outside left wheel to the inside right wheel. According to ability signal control, the yaw rate error is multiplied with the ability signal (+1) to check if it is possible to reduce the yaw rate error. Since the yaw rate error is negative and the ability signal is +1, the product thereof is negative which means that during the present driving condition it is not possible the reduce the yaw rate error by locking the differential. It rather is true, that the yaw rate error would be increased in case the clutch would be engaged.

Otherwise, if the speed of the vehicle is increased during making the right turn, the inner right wheel may loose traction and spin faster than the outer wheel (wheeldiff_rl > 0) and the state will change from "left" to "straight" to "right". When the state has changed to "right", the ability signal will change sign to -1. In that case, the yaw rate error is still negative, but when it is multiplied with the ability signal, the product will become positive. Therefore, the LSD will be engaged to decrease (or even eliminate) the yaw rate error as desired.

Alternatively, when the vehicle makes a left turn, the right wheel turns faster than the left wheel yielding to a positive value of the wheel speed difference (wheeldiff_rl > 0). The state will then change to "right" and the ability signal is set to -1.

In case that the absolute value of the reference yaw rate is bigger than the absolute value of the measured yaw rate, the yaw rate error becomes positive (considering above definition of the sign of the yaw rate). Then, in order to reduce the yaw rate error, the measured yaw rate must become more positive than what it is. However, since the outside right wheel spins faster than the inner left wheel, it is only possible to transfer torque from the inner left wheel to the outside right wheel. According to ability signal control, the yaw rate error is multiplied with the ability signal (-1) to check if it is possible to reduce the yaw rate error. Since the yaw rate error is positive and the ability signal is -1, the product thereof is negative which means that during the present driving condition it is not possible the reduce the yaw rate error by locking the differential. It rather is true, that the yaw rate error would be increased in case the clutch would be engaged.

Otherwise, if the speed of the vehicle is increased during making the left turn, the inner left wheel may loose traction and spin faster than the outer wheel (wheeldiff_rl < 0) and the state will change from "right" to "straight" to "left". When the state has changed to "left", the ability signal will change sign to +1. In that case, the yaw rate error is still positive, and when it is multiplied with the ability signal, the product will remain positive. Therefore, the LSD will be engaged to decrease (or even eliminate) the yaw rate error as desired.

Now, in case that the differential clutch is at least partially engaged, so that a clutch position signal identifying the clutch locking state and ranging from 0 to 1 to identify a fully open and a fully locked state, respectively, for instance is sensed to be over 0.1, meaning that the clutch is more than 10% locked, and in case that the wheel speed difference is between 0 and 1, the "right" state will change to the "locked right" state, and, in case that the wheel rotational speed difference is between 0 and -1, the "left" state will change to the "locked left" state.

When the state is one of the locked states, the output ability signal is the same as in the previous states. However, when in a locked state, the ability signal (s) no longer depends on the rotational speeds of the wheels, but will instead wait for one of three criteria to be satisfied until the wheel speed difference of the left and right wheels can be used to determine direction of possible torque transfer. (Since there is always a rotational speed difference of left and right wheels present due to mechanical torsion in the output axles, this small wheel speed difference might eventually also be used to decide the possible torque transfer direction when the following criteria are fulfilled.)

Accordingly, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if it is sensed that a clutch position signal identifying the locking state of the LSD clutch is below 0.1 meaning that the clutch is less than 10% locked, so that the clutch is very close to fully unlocked. Unlocking the clutch can for instance result from the control strategy controlling on the yaw rate. To this end, the ability signal logic is connected with a dedicated clutch position sensing means for sensing of the locking state of the LSD clutch.

Alternatively, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if a clutch unlocking control signal instructing at least partial unlocking of the clutch is provided to the LSD meaning that the clutch goes from a locked stated to a less locked or even unlocked state. The signal itself is only a flag.

More specifically, such control signal for instance depends on the lateral acceleration of the vehicle and the current road friction coefficient $\mu$. If the lateral acceleration is below a predetermined threshold value, multiplied with $\mu$, and the derivative thereof is negative, above unlocking signal will be output to the actuating means to unlock the differential clutch. Alternatively, if a throttle off signal is recognized, this will also output an unlocking signal to the actuator to unlock the differential clutch.

Further alternatively, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if the measured yaw rate of the vehicle changes its sign.

If at least one of above three criteria according to the three aspects of the invention is fulfilled, then the locked state is changed from "locked right" to "right" or from "locked left" to "left" with the result that the rotational speeds of the right and left wheels again may again be used to determine direction into which torque transfer is possible, i.e. the differential's ability in yaw rate change.

Reference is now made to the split-$\mu$ feed forward logic 10 connected to the adder means 5 for supplying an output signal to the adder means 5 to be added to the output (control) signal of the PID-controller 3.

As explained in the introductory portion, in case one of the driving wheels is located on ground with higher road friction coefficient $\mu$ than the other wheel, if the differential is open, the wheel with lower road friction coefficient $\mu$ will start to spin if too much torque is applied. When this happens, the other wheel can only receive as much torque as the wheel with lower road friction coeffi-

cient $\mu$ can put into tractive force. If the road friction coefficient $\mu$ is very low, the tractive force is also very low, which means that the total longitudinal force of the vehicle is also low that will cause the acceleration to be low, resulting in that the vehicle will almost not move forward or move very slowly. Such a situation where one wheel experiences more traction than the other is conventionally called a "split-$\mu$ condition".

Engaging the differential clutch under the split-$\mu$ condition will bring down the wheel speed difference which occurs due to the low-$\mu$ wheel spin increase. This also transfers torque via the clutch from the side with the low $\mu$ to the other. This moment, however, can, if the differential is locked and a high engine torque is requested, cause a yaw rate that will be too high for the driver to handle. Otherwise, under a split-$\mu$ condition the driver's steering wheel input need not be interpreted as desire to turn but as a desire to stop the car from yawing about its center of gravity. However, when the vehicle stands still, there will be no yaw rate error, so when the driver applies the throttle the differential will not lock if the only control is on the yaw rate error.

In order to overcome such drawback, according to the present invention, the split-$\mu$ feed forward logic 10 is adapted to transfer an appropriate amount of torque under split-$\mu$ condition.

Accordingly, locking of the LSD is dependent on the throttle input as well as on the steering wheel angle from the driver. More specifically, the driver's throttle input as measured by a throttle sensing means is used to make a feed forward locking of the differential. In the adder means 5, the output signal of the split-$\mu$ feed forward logic 10 is added to the control signal created by the PID-controller 3 to create an improved control signal for supplying to the actuator to control the LSD.

Hence, the throttle input is interpreted as an acceleration request, with the result that if the throttle is pressed down rapidly a high acceleration is desired. The differential is locked according to the throttle request. Additionally, using a rate limiter, the steering wheel angle or the steering wheel turning rate is also taken into account. If the driver steers "actively", this is interpreted as a more active driving and therefore the differential is locked faster, thereby allowing a more responsive vehicle. The vehicle will gain better traction because of the engagement of the differential.

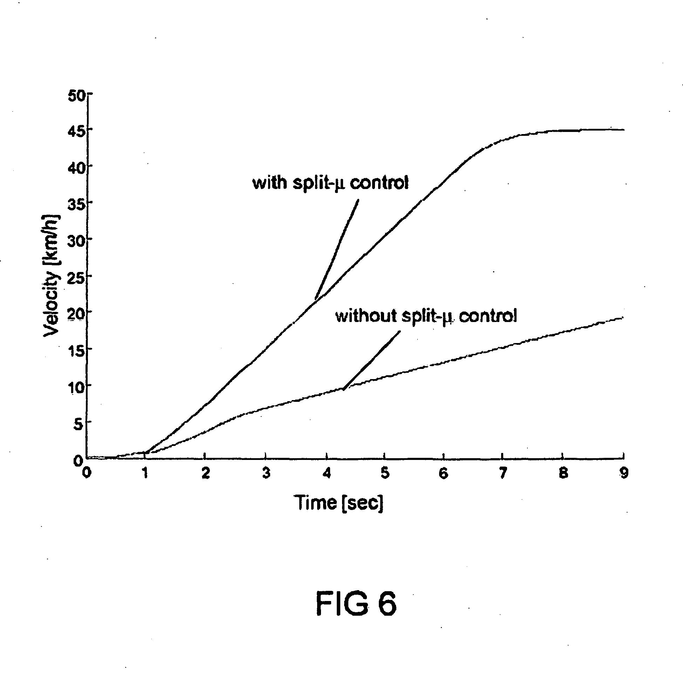

Reference is now made to FIG. 6 depicting as an example the vehicle velocity [km/h] over time [sec] of a vehicle driving on a split-$\mu$ surface. Accordingly, as can be taken from FIG. 6, upper curve, in case of an electronically controlled LSD using split-$\mu$ feed forward logic 10 for locking the LSD, the vehicle velocity is increased over the case of an open differential, lower curve.

Now, reference is made to the scenario identification logic 9, that on its input side, is provided with the measured yaw rate, the measured lateral acceleration, the wheel speeds, the clutch position, the engine torque and the steering wheel angle. Output signals of the scenario identification logic 9 are supplied to the PID-controller 3, the adaptation logic 7 and the processing means 11. The scenario identification logic 9 determines the current driving scenarios of the vehicle. The outputs from the scenario identification logic 9 are the current driving states and the parameters of the PID-controller, $K_p$, $K_i$ and $K_d$, which correspond to the wanted control behavior of the control system. The parameters will be changed when the driving scenario changes.

Obviously many modifications and variations of the present invention are possible in light of the above description. It is therefore to be understood, that within the scope of appended claims, the invention may be practiced otherwise than as specifically devised.

While the invention has been described in detail and with reference to specific embodiments thereof, it will be apparent to one of skill in the art that various changes and modifications can be made therein without departing from the scope thereof. Accordingly, it is intended that the present invention covers the modifications and variations of this invention provided they come within the scope of the appended claims.

List of reference signs

1     System
2     Error signal forming means
3     PID-controller
4     Actuator
5     Adder means
6     Bicycle reference model logic
7     Adaptation logic
8     Ability signal logic
9     Scenario identification logic
10    Split-$\mu$ feed forward logic
11    Processing means

**Claims**

1.    A method of controlling a clutch based limited slip differential (LSD) of a vehicle in a PID-controller based closed loop control system, said control system including a PID-controller (3) for controlling said LSD to control the vehicle's yaw rate, said PID-controller being adapted to create a control signal based on yaw rate error as calculated on basis of reference and measured yaw rates, said control signal being supplied to an actuating means operatively coupled to said LSD for actuating thereon based on said control signal; said system further comprising an ability signal logic (8) being provided with wheel speeds of wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partially engaged state of the LSD, whether said wheel speed difference may be used to determine possible torque transfer, with the wheel speed difference being used if a clutch position signal as sensed by a clutch position sensing means connected to said ability logic is sensed to be below a predetermined threshold value.

2.    A method of controlling a clutch based limited slip differential (LSD) of a vehicle in a PID-controller based closed loop control system, said control system including a PID-controller (3) for controlling said LSD to control the vehicle's yaw rate, said PID-controller being adapted to create a control signal based on yaw rate error as calculated on basis of reference and measured yaw rates, said control signal being supplied to an actuating means operatively coupled to said LSD for actuating thereon based on said control signal; said system further comprising an ability signal logic (8) being provided with wheel speeds of wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partially engaged state of the LSD, whether said wheel speed difference may be used to determine possible torque transfer, with the wheel speed difference being used if a clutch unlocking control signal instructing at least partial unlocking the LSD clutch is supplied to the actuating means.

3.    The method of claim 2, in which said clutch unlocking control signal is supplied to said actuating means in case a lateral acceleration of the vehicle as measured by a lateral acceleration sensing means connected to said ability signal logic goes below a predetermined threshold value, with the further condition that the derivative thereof changes its sign.

4.    The method of claim 2, in which said clutch unlocking control signal is supplied to said actuating means in case of throttle off communicated to said ability signal logic as sensed by a throttle input sensing means connected to said ability signal logic.

5.    A method of controlling a clutch based limited slip differential (LSD) of a vehicle in a PID-controller based closed loop control system, said control system including a PID-controller (3) for controlling said LSD to control the vehicle's yaw rate, said PID-controller being adapted to create a control signal based on yaw rate error as calculated on basis of reference and measured yaw rates, said control signal being supplied to an actuating means operatively coupled to said LSD for actuating thereon based on said control signal; said system further comprising an ability signal logic (8) being provided with wheel speeds of wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partially engaged state of the LSD, whether said wheel speed difference may be used to determine possible torque transfer, with the wheel speed difference being used if said measured yaw rate of the vehicle changes its sign.

6. The method according to any one of the preceding claims, wherein said control system further comprises:

a reference yaw rate determination logic (6) for determining a reference yaw rate; and
an adaptation logic (7) for creating an adapted yaw rate error signal to be provided to said PID-controller, said adaptation logic being interconnected between said reference yaw rate determination logic and said PID-controller and provided with said reference yaw rate and a measured yaw rate as measured by a yaw rate sensing means; wherein said method comprising a step of adapting said yaw rate error when releasing throttle in making a turn performed by said adaptation logic, which adaptation of the yaw rate error comprises the steps of:

- initiating of adaptation of the yaw rate error;
- dividing of the measured yaw rate by the reference yaw rate to calculate a yaw rate ratio at initiation of the adaptation; and
- multiplying said yaw rate ratio with the reference yaw rate during said throttle off condition to create an adapted error rate signal to be supplied to said PID-controller.

7. The method of claim 6, in which said reference yaw rate is determined using a bicycle model.

8. The method according to any of the preceding claims, in which said control system further comprises a split-$\mu$ feed forward logic (10) adapted for outputting a control signal to be added to the control signal of the PID-controller (3), wherein said method of controlling said control system comprises the steps of:

- sensing the driver's throttle input and outputting a split-$\mu$ feed forward logic control signal formed in proportionality to the driver's throttle input;

- adding of the split-$\mu$ feed forward logic control signal to the output signal of the PID-controller to create a control signal for controlling the LSD.

9. The method of claim 8, further comprising a steering wheel angle sensing means for sensing of a wheel angle of the steering wheel, wherein said method comprises the step of sensing a steering wheel angle, and wherein said split-$\mu$ feed forward logic control signal is limited in proportionality to said sensed steering wheel angle.

10. The method of claim 8, further comprising a steering wheel turning rate sensing means for sensing of a turning rate of the steering wheel, wherein said method comprises the step of sensing a steering wheel turning rate, and wherein said split-$\mu$ feed forward logic control signal is limited in proportionality to said sensed steering wheel turning rate.

**Patentansprüche**

1. Verfahren zur Steuerung eines Kupplungs-basierten schlupfbegrenzten Differentials (LSD) eines Fahrzeugs in einem PID-Regler-basierten Steuersystem, wobei das Steuersystem einen PID-Regler (3) zur Steuerung des LSD zur Kontrolle der Gierrate des Fahrzeugs umfasst, wobei der PID-Regler geeignet ist, ein Steuersignal auf Basis des Gierratenfehlers gemäß Berechnung anhand von Referenz- und gemessenen Gierraten zu produzieren, wobei dieses Steuersignal an ein Betätigungsmittel gesendet wird, das in Arbeitsverbindung mit dem LSD steht, um auf dieses nach Maßgabe des Steuersignals einzuwirken; wobei das System ferner eine Ability-Signallogik (8) aufweist, der die Radgeschwindigkeiten der durch das LSD gekoppelten Räder gemeldet werden und die geeignet ist, auf Basis einer Radgeschwindigkeitsdifferenz ein Ability-Signal abzugeben, wobei die Ability-Signallogik mit dem PID-Regler verbunden ist, um das Ability-Signal an den PID-Regler zu senden, um mit dem Gierratenfehler multipliziert zu werden; wobei das Verfahren einen Schritt der Entscheidung in einem zumindest teilweise eingreifenden Zustand des LSD umfasst, ob die Radgeschwindigkeitsdifferenz dazu benutzt werden kann, einen möglichen Drehmomentdurchgang zu bestimmen, wobei die Radgeschwindigkeitsdifferenz verwendet wird, wenn von einem Kupplungspositionssignal, das von einem mit der Ability-Logik verbundenen Kupplungspositions-Sensormittel erfasst worden ist, ein Wert unter einem festgelegten Schwellwert ermittelt wird.

2. Verfahren zur Steuerung eines Kupplungs-basierten schlupfbegrenzten Differentials (LSD) eines Fahrzeugs in einem PID-Regler-basierten Steuersystem, wobei das Steuersystem einen PID-Regler (3) zur Steuerung des LSD zur Kontrolle der Gierrate des Fahrzeugs umfasst, wobei der PID-Regler geeignet ist, ein Steuersignal auf Basis des Gierratenfehlers gemäß Berechnung anhand von Referenz- und gemessenen Gierraten zu produzieren, wobei dieses Steuersignal an ein Betätigungsmittel gesendet wird, das in Arbeitsverbindung mit dem LSD steht, um auf dieses nach Maßgabe des Steuersignals einzuwirken; wobei das System ferner eine Ability-Signallogik (8) aufweist, der die Radgeschwindigkeiten der durch das LSD gekoppelten Räder gemeldet werden und die geeignet ist, auf Basis einer Radgeschwindigkeitsdifferenz ein Ability-Signal abzugeben, wobei die Ability-Signallogik mit dem PID-Regler verbunden ist, um das Ability-Signal an den PID-Regler zu senden, um mit dem Gierratenfehler multipliziert zu werden; wobei das Verfahren einen Schritt der Entscheidung in einem zumindest teilweise eingreifenden Zustand des LSD umfasst, ob die Radgeschwindigkeitsdifferenz dazu benutzt werden kann, einen möglichen Drehmomentdurchgang zu bestimmen, wobei die Radgeschwindigkeitsdifferenz verwendet wird, wenn an das Betätigungsmittel ein Kupplungsöffnungs-Steuersignal gesendet wird, das ein zumindest teilweises Öffnen der LSD-Kupplung verlangt.

3. Verfahren gemäß Anspruch 2, in dem das Kupplungsöffnungs-Steuersignal an das Betätigungsmittel abgegeben wird, falls eine von einem mit der Ability-Signallogik verbundenen Seitenbeschleunigungssensormittel gemessene Seitenbeschleunigung des Fahrzeugs über einen bestimmten Schwellwert hinaus geht, mit der zusätzlichen Bedingung, dass die Ableitung hiervon ihr Vorzeichen ändert.

4. Verfahren gemäß Anspruch 2, in dem das Kupplungsöffnungs-Steuersignal an das Betätigungsmittel abgegeben wird, falls an die Ability-Signallogik der Zustand "Gas-weg" kommuniziert wird, welcher von einem mit der Ability-Signallogik verbundenen Gaseingangssensormittel festgestellt wird.

5. Verfahren zur Steuerung eines Kupplungs-basierten schlupfbegrenzten Differentials (LSD) eines Fahrzeugs in einem PID-Regler-basierten Steuersystem, wobei das Steuersystem einen PID-Regler (3) zur Steuerung des LSD zur Kontrolle der Gierrate des Fahrzeugs umfasst, wobei der PID-Regler geeignet ist, ein Steuersignal auf Basis des Gierratenfehlers gemäß Berechnung anhand von Referenz- und gemessenen Gierraten zu produzieren, wobei dieses Steuersignal an ein Betätigungsmittel gesendet wird, das in Arbeitsverbindung mit dem LSD steht, um auf dieses nach Maßgabe des Steuersignals einzuwirken; wobei das System ferner eine Ability-Signallogik (8) aufweist, der die Radgeschwindigkeiten der durch das LSD gekoppelten Räder gemeldet werden und die geeignet ist, auf Basis einer Radgeschwindigkeitsdifferenz ein Ability-Signal abzugeben, wobei die Ability-Signallogik mit dem PID-Regler verbunden ist, um das Ability-Signal an den PID-Regler zu senden, um mit dem Gierratenfehler multipliziert zu werden; wobei das Verfahren einen Schritt der Entscheidung in einem zumindest teilweise eingreifenden Zustand des LSD umfasst, ob die Radgeschwindigkeitsdifferenz dazu benutzt werden kann, einen möglichen Drehmomentdurchgang zu bestimmen, wobei die Radgeschwindigkeitsdifferenz verwendet wird, wenn die gemessene Gierrate des Fahrzeugs ihr Vorzeichen ändert.

6. Verfahren gemäß einem der vorangehenden Ansprüche, wobei das Steuersystem ferner Folgendes umfasst:

    eine Referenz-Gierraten-Feststellungslogik (6) zur Bestimmung einer Referenz-Gierrate; und eine Adaptierungslogik (7) zur Produktion eines an den PID-Regler abzugebenden, adaptierten Gierraten-Fehlersignals, wobei die Adaptierungslogik zwischen der Referenz-Gierraten-Feststellungslogik und dem PID-Regler eingesetzt ist und mit der Referenz-Gierrate und einer von einem Gierraten-Sensormittel gemessenen Gierrate versorgt wird; wobei das Verfahren einen von der Adaptierungslogik durchgeführten Schritt der Adaptierung des Gierratenfehlers umfasst, wenn in einer Kurve das Gas zurückgenommen wird, wobei die Adaptierung des Gierratenfehlers folgende Schritte umfasst:

    - Auslösen der Adaptierung des Gierratenfehlers;
    - Dividieren der gemessenen Gierrate durch die Referenz-Gierrate zur Berechnung eines Gierraten-Verhältnisses bei Auslösung der Adaptierung; und
    - Multiplizieren des Gierraten-Verhältnisses mit der Referenz-Gierrate während der Gas-weg-Bedingung zur Produktion eines adaptierten Fehlerratensignals zur Weitergabe an den PID-Regler.

7. Verfahren gemäß Anspruch 6, in dem die Referenz-Gierrate unter Anwendung eines Fahrradmodells bestimmt wird.

8. Verfahren gemäß einem der vorangehenden Ansprüche, in dem das Steuersystem ferner eine Teilungs-$\mu$-Vorwärtslogik (10) umfasst, die geeignet ist, ein Steuersignal abzugeben, das zu dem Steuersignal des PID-Reglers (3) hinzugefügt wird, wobei

das Verfahren zur Steuerung des Steuersystems folgende Schritte umfasst:

> - Feststellen der vom Fahrer kommenden Gas-Eingabe und Ausgeben eines Teilungs-$\mu$-Vorwärtslogik-Steuersignals, das proportional zur Gas-Eingabe des Fahrers gebildet wird;
> - Hinzufügen des Teilungs-$\mu$-Vorwärtslogik-Steuersignals zum Ausgangssignal des PID-Reglers zur Produktion eines Steuersignals zur Steuerung des LSD.

**9.** Verfahren gemäß Anspruch 8, das ferner ein Lenkradwinkelsensormittel zur Feststellung eines Lenkradwinkels des Lenkrads umfasst, wobei das Verfahren den Schritt der Feststellung eines Lenkradwinkels umfasst und wobei das Teilungs-$\mu$-Vorwärtslogik-Steuersignal proportional zu dem ermittelten Lenkradwinkel beschränkt ist.

**10.** Verfahren gemäß Anspruch 8, das ferner ein Lenkrad-Drehratensensormittel zur Feststellung einer Drehrate des Lenkrads umfasst, wobei das Verfahren den Schritt der Feststellung einer Lenkrad-Drehrate umfasst und wobei das Teilungs-$\mu$-Vorwärtslogik-Steuersignal proportional zu der festgestellten Lenkrad-Drehrate beschränkt ist.

**Revendications**

**1.** Procédé pour le contrôle d'un différentiel autobloquant à embrayage d'un véhicule dans un système de contrôle à boucle fermée basé sur un contrôleur PID, lequel système de contrôle comprend un contrôleur PID (3) pour contrôler ledit différentiel autobloquant pour contrôler le taux de lacet du véhicule, ledit contrôleur PID étant adapté pour créer un signal de contrôle en fonction d'une erreur de taux de lacet calculée sur la base de taux de lacet de référence et mesurés, ledit signal de contrôle étant fourni à un moyen d'actionnement couplé de façon opérationnelle audit différentiel autobloquant pour agir sur celui-ci en fonction dudit signal de contrôle ; lequel système comprend en outre une logique de signal d'aptitude (8) recevant les vitesses de roues couplées par ledit différentiel autobloquant et adaptée pour créer un signal d'aptitude en fonction d'une différence de vitesse des roues, ladite logique de signal d'aptitude étant connectée audit contrôleur PID pour fournir ledit signal d'aptitude audit contrôleur PID pour qu'il soit multiplié par ladite erreur de taux de lacet ; ledit procédé comprenant une étape de décision, dans un état au moins partiellement engagé du différentiel autobloquant, du fait que ladite différence de vitesse des roues peut ou non être utilisée pour déterminer le transfert de couple possible, la différence de vitesse des roues étant utilisée si un signal de position de l'embrayage détecté par un moyen de détection de la position de l'embrayage connecté à ladite logique d'aptitude est détecté en dessous d'une valeur de seuil prédéterminée.

**2.** Procédé pour le contrôle d'un différentiel autobloquant à embrayage d'un véhicule dans un système de contrôle à boucle fermée basé sur un contrôleur PID, lequel système de contrôle comprend un contrôleur PID (3) pour contrôler ledit différentiel autobloquant pour contrôler le taux de lacet du véhicule, ledit contrôleur PID étant adapté pour créer un signal de contrôle en fonction d'une erreur de taux de lacet calculée sur la base de taux de lacet de référence et mesurés, ledit signal de contrôle étant fourni à un moyen d'actionnement couplé de façon opérationnelle audit différentiel autobloquant pour agir sur celui-ci en fonction dudit signal de contrôle ; lequel système comprend en outre une logique de signal d'aptitude (8) recevant les vitesses de roues couplées par ledit différentiel autobloquant et adaptée pour créer un signal d'aptitude en fonction d'une différence de vitesse des roues, ladite logique de signal d'aptitude étant connectée audit contrôleur PID pour fournir ledit signal d'aptitude audit contrôleur PID pour qu'il soit multiplié par ladite erreur de taux de lacet ; ledit procédé comprenant une étape de décision, dans un état au moins partiellement engagé du différentiel autobloquant, du fait que ladite différence de vitesse des roues peut ou non être utilisée pour déterminer le transfert de couple possible, la différence de vitesse des roues étant utilisée si un signal de contrôle de déverrouillage de l'embrayage ordonnant au moins un déverrouillage partiel de l'embrayage différentiel autobloquant est fourni au moyen d'actionnement.

**3.** Procédé selon la revendication 2, dans lequel ledit signal de contrôle de déverrouillage de l'embrayage est fourni audit moyen d'actionnement dans le cas où une accélération latérale du véhicule mesurée par un moyen de détection de l'accélération latérale connecté à ladite logique de signal d'aptitude passe en dessous d'une valeur de seuil prédéterminée, à condition en outre que sa dérivée change de signe.

**4.** Procédé selon la revendication 2, dans lequel ledit signal de contrôle de déverrouillage de l'embrayage est fourni audit signal d'actionnement si une coupure des gaz est communiquée à ladite logique de signal d'aptitude par un moyen de détection d'entrée de commande des gaz connecté à ladite logique de signal d'aptitude.

**5.** Procédé pour le contrôle d'un différentiel autobloquant à embrayage d'un véhicule dans un système de contrôle à boucle fermée basé sur un contrôleur PID, lequel système de contrôle comprend un contrôleur PID (3) pour contrôler ledit différentiel autobloquant pour contrôler le taux de lacet du véhicule, ledit contrôleur PID étant adapté pour créer un signal de contrôle en fonction d'une erreur de taux de lacet calculée sur la base de taux de lacet de référence et mesurés, ledit signal de contrôle étant fourni à un moyen d'actionnement couplé de façon opérationnelle audit différentiel autobloquant pour agir sur celui-ci en fonction dudit signal de contrôle ; lequel système comprend en outre une logique de signal d'aptitude (8) recevant les vitesses de roues couplées par ledit différentiel autobloquant et adaptée pour créer un signal d'aptitude en fonction d'une différence de vitesse des roues, ladite logique de signal d'aptitude étant connectée audit contrôleur PID pour fournir ledit signal d'aptitude audit contrôleur PID pour qu'il soit multiplié par ladite erreur de taux de lacet ; ledit procédé comprenant une étape de décision, dans un état au moins partiellement engagé du différentiel autobloquant, du fait que ladite différence de vitesse des roues peut ou non être utilisée pour déterminer le transfert de couple possible, la différence de vitesse des roues étant utilisée si ledit taux de lacé mesuré du véhicule change de signe.

6. Procédé selon l'une quelconque des revendications précédentes, dans lequel ledit système de contrôle comprend en outre :

    une logique de détermination du taux de lacet de référence (6) pour déterminer un taux de lacet de référence ; et
    une logique d'adaptation (7) pour créer un signal d'erreur de taux de lacet adaptée qui sera fourni audit contrôleur PID, ladite logique d'adaptation étant interconnectée entre ladite logique de détermination du taux de lacet de référence et ledit contrôleur PID et recevant ledit taux de lacet de référence et un taux de référence mesuré qui est mesuré par un moyen de détection du taux de lacet ; ledit procédé comprenant une étape d'adaptation de ladite erreur de taux de lacet lorsque le papillon de gaz est relâché par l'exécution d'un tour par ladite logique d'adaptation, laquelle adaptation de l'erreur de taux de lacet comprend les étapes de :

        - initiation de l'adaptation de l'erreur de taux de lacet ;
        - division du taux de lacet mesuré par le taux de lacet de référence pour calculer un rapport de taux de lacet au début de l'adaptation ; et
        - multiplication dudit rapport de taux de lacet par le taux de lacet de référence pendant ledit état de fermeture du papillon des gaz pour créer un signal de taux d'erreur adaptée qui sera fourni audit contrôleur PID.

7. Procédé selon la revendication 6, dans lequel ledit taux de lacet de référence est terminé à l'aide d'un modèle à deux roues.

8. Procédé selon l'une quelconque des revendications précédentes, dans lequel ledit système de contrôle comprend en outre une logique d'anticipation en adhérence précaire (10) adaptée pour émettre en sortie un signal de contrôle qui sera additionné au signal de contrôle du contrôleur PID (3), ledit procédé de contrôle dudit système de contrôle comprenant les étapes de :

    - détection de l'entrée de commande des gaz du conducteur et émission en sortie d'un signal de contrôle de logique d'anticipation en adhérence précaire proportionnel à l'entrée de commande des gaz du conducteur ;
    - ajout du signal de contrôle de logique d'anticipation en adhérence précaire au signal de sortie du contrôleur PID pour créer un signal de contrôle pour contrôler le différentiel autobloquant.

9. Procédé selon la revendication 8, comprenant en outre un moyen de détection de l'angle du volant de direction pour détecter un angle du volant de direction, lequel procédé comprend l'étape de détection d'un angle du volant et dans lequel ledit signal de contrôle de logique d'anticipation en adhérence précaire est limité en proportion dudit angle détecté du volant de direction.

10. Procédé selon la revendication 8, comprenant en outre un moyen de détection de la vitesse de rotation du volant de détection pour détecter une vitesse de rotation du volant de direction, lequel procédé comprend l'étape de détection d'une vitesse de rotation du volant de direction, et dans lequel ledit logique d'anticipation en adhérence précaire est limité en proportion de ladite vitesse de rotation détectée du volant de direction.

FIG 1

**FIG 2**

**FIG 3**

**FIG 4**

FIG 5

FIG 6

FIG 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1616743 A